# FASCICULE DE BREVET EUROPEEN

(11) **EP 3 726 985 B1**
(45) Date de publication et mention de la délivrance du brevet: **13.09.2023**
(21) Numéro de dépôt: 18833057.5
(22) Date de dépôt: 21.12.2018
(51) Int. Cl.: A01N 25/02, A01N 25/18, A01N 31/02, A01N 31/08, A01N 43/90, A01N 37/02, A01P 19/00

(54) **COMPOSITION DE SEMIOCHIMIQUES A DIFFUSION REGULEE**
SEMIOCHEMISCHE ZUSAMMENSETZUNG MIT KONTROLLIERTER DIFFUSION
CONTROLLED-DIFFUSION SEMIOCHEMICAL COMPOSITION

(30) Priorité: 22.12.2017 FR 1762907
(43) Date de publication de la demande: 28.10.2020
(73) Titulaire: Melchior Material And Life Science France, 64170 LACQ (FR)
(72) Inventeur: GUERRET, Olivier, 46170 PERN (FR); DUFOUR, Samuel, 17620 Saint-Agnan (FR)
(74) Mandataire: Regimbeau
(86) Numéro de dépôt international: PCT/EP2018/086756
(87) Numéro de publication internationale: WO 2019/122410

(56) Documents cités:
- EP-A1- 3 187 046
- EP-A2- 0 194 896
- DATABASE WPI Week 201804 Thomson Scientific, London, GB; AN 2017-846174 XP002779443, & KR 2017 0128993 A (LEE D H) 24 novembre 2017 (2017-11-24)
- DATABASE WPI Week 201646 Thomson Scientific, London, GB; AN 2016-33180P XP002779445, & KR 2016 0057708 A (LEE D H) 24 mai 2016 (2016-05-24)
- DATABASE WPI Week 201668 Thomson Scientific, London, GB; AN 2016-35518D XP002779444, & CN 105 594 697 A (CHEN C) 25 mai 2016 (2016-05-25)

## Description

La présente invention décrit des nouvelles formulations éthanoliques de sémiochimiques dans des diffuseurs à mèche particulièrement efficaces pour réguler la diffusion de plusieurs sémiochimiques à volatilités différentes sur des périodes de plusieurs mois quelle que soit la température extérieure.

Dans le but de traiter des problèmes d'invasion d'insectes dans le domaine agricole ou sanitaire, il a été développé récemment de nombreuses technologies à base de sémiochimiques.

Les substances sémiochimiques (phéromones, kayromones, allomones et synomones), sont des substances plus ou moins volatiles de plus en plus utilisées dans de nombreux domaines que ce soit, par exemple, pour contrôler le comportement des animaux ou pour réguler les populations d'insectes ravageurs. Les sémiochimiques sont des substances chimiques pures ou en mélange dont se servent un grand nombre d'espèces animales pour communiquer.

Les substances sémiochimiques sont réparties dans différentes classes selon les natures de l'émetteur ou du récepteur. Ainsi on parle d'une part de phéromones - qui permettent la communication entre des individus (en général des insectes) appartenant à la même espèce. Les phéromones sont des substances chimiques comparables aux hormones, émises par la plupart des animaux, en particulier les insectes, et qui agissent comme des messagers entre les individus d'une même espèce, transmettant aux autres individus des informations qui jouent un rôle dans l'attirance sexuelle notamment.

On parle d'autre part d'allomones regroupant les substances sémiochimiques produites par un être vivant et qui interagit avec un autre être vivant d'une espèce différente ; espèce animale vers autre espèce animale et /ou plantes vers espèces animales. Cette interaction est positive pour l'espèce émettrice.

On parle aussi de kayromones qui regroupent les substances libérées dans l'environnement, produites par un être vivant émetteur (qui peut être une plante, un animal, un champignon ou une colonie bactérienne), qui déclenchent une réponse comportementale chez une autre espèce réceptrice en lui procurant un bénéfice.

Enfin on parle aussi de synomones qui regroupent les substances sémiochimiques produites par un être vivant, qui déclenchent une réponse comportementale chez une autre espèce et dont l'effet est positif pour l'émetteur et le receveur.

Les substances sémiochimiques peuvent être perçues par l'odorat pour les composés volatils, ou par le goût pour les composés non volatils. Les informations portées par les sémiochimiques peuvent permettre la localisation et la reconnaissance, en particulier d'un partenaire sexuel dans le cas des phéromones.

Les substances sémiochimiques et plus particulièrement les phéromones sont des composés chimiques dont un grand nombre d'exemples (8000) est donné dans la base de données accessible en ligne Pherobase (www.pherobase.com).

L'utilisation de phéromones pour le contrôle des populations d'insectes ravageurs de récoltes est bien connue de l'homme du métier. Les invasions d'insectes intervenant plusieurs fois sur une saison, il faut résoudre le problème de la diffusion, pendant toute la saison, d'une quantité suffisante de phéromone permettant soit de guider les insectes vers un piège à insecte soit de saturer les antennes des insectes qui permettent normalement à un mâle de retrouver des femelles (ou le contraire).

Les fonctions de ces substances dépendent de la réaction qu'elles provoquent sur les individus. Certaines phéromones vont être attractantes tandis que d'autres peuvent être répulsives.

La compréhension de la relation entre sémiochimiques et comportement d'insectes est une science dénommée éthologie et de nombreuses publications illustrent différents comportements d'insectes en fonctions de telles substances.

Dans de nombreux cas, il a été établi que des odeurs, en particulier d'origine végétale, augmentent fortement l'attractivité des phéromones de certains insectes.

L'effet synergique des odeurs végétales sur la communication phéromonale a été mis en évidence à la suite de l'attraction très faible de certaines phéromones d'agrégation sur le terrain, insatisfaisante pour des applications agronomiques. Cette synergie est généralement attribuée à l'augmentation d'attraction de la phéromone par une odeur végétale à un niveau supérieur à celui de la phéromone seule.

Par exemple chez *Carpohilus hemipterus*, la capture des pièges appâtés avec la phéromone et du raisin pourri a été significativement supérieure à celle des pièges avec la phéromone seule (15 fois) ou avec le matériel végétal seul.

Les Nitidulidae sont attirés par les odeurs d'une vaste gamme d'aliments fermentés comme la pâte à pain, les fruits et les légumes et chez plusieurs espèces, les phéromones d'agrégation produites par les mâles ont été identifiées avec des effets attractifs très faibles mais ayant un effet synergique avec des odeurs de nourriture.

Chez *Metamasius hemipterus sericeus*, les doses élevées d'acétate d'éthyle (> 800 mg/j), de propionate d'éthyle (> 300 mg/j), de butyrate d'éthyle (> 100 mg/j) ou le mélange des trois produits ont été aussi attractifs que 250 g de canne à sucre. L'acétate d'éthyle à une dose > 650 mg/j a montré un effet synergique avec les phéromones équivalent à 250 g de canne à sucre sur le terrain.

Cependant, ces composés synergisants sont très volatiles ce qui les rend difficilement compatibles dans une combinaison avec des phéromones d'insectes dont le point d'ébullition est souvent supérieur à 150°C voire au-delà.

Il est donc très important de pouvoir contrôler un relargage homogène sur de longues périodes de formulations de phéromones en particulier de formulations éthanoliques dans lesquelles l'évaporation de l'éthanol pose aussi un challenge. En effet, l'éthanol présente une volatilité accrue par rapport à nombre de phéromones et dans un environnement chaud, l'éthanol est entièrement évaporé alors que la phéromone n'est que partiellement évaporée. En outre, compte tenu du caractère synergisant de phéromone de l'éthanol (en tant que produit de dégradation de fruits), une fois l'éthanol évaporé, son effet synergique disparait.

Il est ainsi important de contrôler l'évaporation simultanée de la phéromone, du solvant éthanolique (pouvant jouer le rôle d'agent synergisant) et d'un éventuel agent synergisant volatil, par exemple l'acétate d'éthyle.

Si on considère l'exemple du charançon rouge du palmier, le mélange attractant le plus efficace contient 76% d'éthanol 25.4% d'acétate d'éthyle et 0.6% de féruginéol. Le point d'ébullition du féruginéol est de 208°C ce qui rend difficilement possible son évaporation simultanée avec l'éthanol et l'acétate d'éthyle.

Un autre problème rencontré par l'homme du métier dans la lutte contre cet insecte consiste en la durée de diffusion de formulations éthanoliques. En effet, dans les pays chauds en particulier, les attaques du charançon rouge ont lieu tout au long de l'année. Dans un environnement chaud, l'évaporation rapide de l'éthanol rend nécessaire la recharge très régulière des pièges ce qui est coûteux. Par ailleurs, la durée d'évaporation dépend très fortement de la température ce qui rend aléatoire la durée de diffusion du fait des variations saisonnières de la température.

L'homme du métier a essayé de construire des stratégies pour résoudre ces deux problèmes. Par exemple, l'utilisation de deux diffuseurs en parallèle a été développée (Dhouibi & al. International Journal of Agriculture Innovations and Research Volume 5, Issue 6, 2319-1473).

De nombreux documents décrivent également des systèmes permettant une diffusion prolongée de sémiochimiques.

Le document CN105594697A décrit une formulation affectant le comportement des insectes résistante aux intempéries comprenant un attractif ou répulsif d'insecte, de la cire, de l'eau et un ou plusieurs polymères choisis parmi l'alcool polyvinylique, le polyacétate de vinyle, un polyacrylate et/ou du gluten.

Le document KR20160057708 décrit une composition pour attirer *Monochamus alternatus* à base d'une phéromone de cet insecte, un alcool comprenant 2 à 10 atomes de carbone, un composé volatile dérivé du pin et un dérivé du phénol. L'utilisation d'un support inorganique poreux permet une diffusion prolongée de cette composition.

Le document KR20170128993 décrit une composition pour attirer *Monochamus saltuarius* à base d'une phéromone de cet insecte, un alcool comprenant 2 à 10 atomes de carbone, et un composé volatile dérivé du pin. La composition peut comprendre un composé pour libération prolongée choisi parmi le polystyrène, un polyester, le succinate d'acétate d'hydroxypropylméthylcellulose, l'éthylcellulose, un copolymère de méthacrylate d'ammonium, un copolymère d'acide méthacrylique, l'acétate de cellulose, un copolymère de polyméthacrylate de méthyle, l'acétate de polyvinyle.

Le document EP0194896 divulgue un appareil de diffusion prolongée d'un ingrédient actif, tel qu'un attractif pour insecte, comprenant une membrane perméable à base de polyéthylène, polypropylène ou leurs mélanges.

Le document EP3187046 décrit une composition solide comprenant une matrice nanostructurée constituée d'au moins un copolymère à blocs acryliques et une substance sémiochimique.

La société Arysta a également développé des flacons avec des membranes poreuse ou des mèches sensées retarder l'évaporation de formulation. Par exemple, au printemps dans le sud de la France, une telle formule va être active pendant 2 à 3 mois alors qu'en plein été elle ne durera pas plus de 1 mois ce qui est notoirement insuffisant.

Ces solutions sont donc dépendantes de la température et n'ont pas la tenue suffisante pour éviter des maintenances fréquentes et coûteuses dans les champs.

La présente invention se rapporte au relargage contrôlé dans l'atmosphère de substances sémiochimiques volatiles variées par une composition liquide éthanolique comportant une phéromone et un polymère dont la solubilité augmente avec la température et permet donc une viscosité accrue aux températures élevées (de l'ordre de 40°C) et une viscosité plus faible à des températures basses (de l'ordre de 10 à 20°C). Ainsi à basses températures, la libération de la phéromone est facilitée, relativement aux températures élevées ou la viscosité limite la volatilité.

C'est ainsi que, dans un premier mode de réalisation, la présente invention propose une formulation phéromonale comprenant :
a) 20% à 90%, en volume, d'éthanol,
b) 0.1% à 10%, en poids, d'au moins une phéromone dont la température d'ébullition est supérieure à 180°C à pression atmosphérique,
c) 0.1% à 10% en poids d'un polymère dont la solubilité, dans l'éthanol, est supérieure à 10% (p/v) à 70°C et inférieure à 1% (p/v) à 20°C,
d) 0 à 40% en poids d'au moins un composé synergisant de la phéromone choisi parmi : les acétates de (C₁-C₆)alkyle, les esters d'un acide carboxylique en C₁-C₆ avec l'éthanol, l'acide acétique, l'acétate d'ammonium, l'acétoïne, l'ammoniac, le carbonate d'ammonium, le phosphate d'ammonium, les dérivés terpéniques tels que l'alpha-pinène ou le menthol, l'acide salicylique et leurs mélanges
e) de 0 à 5% en poids d'anti-oxydants,
caractérisée en ce que le polymère est un copolymère à blocs acryliques tri-blocs PMMA-PABu-PMMA.

Les % en poids sont indiqués par rapport au poids total de la formulation.

Selon un mode de réalisation de l'invention, la quantité d'éthanol est comprise entre 30 et 90%, particulièrement entre 40 et 90%, plus particulièrement entre 50 et 90%, plus particulièrement entre 60 et 90%, et encore plus particulièrement entre 70 et 90%, en volume par rapport au volume de la formulation.

La quantité de phéromone de point d'ébullition supérieur à 180°C dans la formulation selon l'invention pourra être comprise entre 0.1 et 10%, particulièrement entre 0,5 et 10%, plus particulièrement entre 1 et 10%, encore plus particulièrement entre 2 et 6%, particulièrement aux environs de 5 %, en poids par rapport au poids de la formulation.

Selon l'invention, la ou les phéromones présente(nt) une température d'ébullition supérieure à 180°C à pression atmosphérique, particulièrement supérieure à 185°C, plus particulièrement supérieure à 190°C, plus particulièrement encore supérieure à 200°C. Par pression atmosphérique on entend une pression de 760 mm d'Hg.

Parmi les exemples de phéromones connues et utilisables selon la présente invention on peut citer les dérivés d'acide méthyl-octanoïque, les dérivés du lavendulol, les lactones contenant des cycles de 5 à 10 atomes de carbone, les phéromones à longues chaines, et leurs mélanges.

Selon un mode de réalisation, la phéromone est choisie dans le groupe constitué par la phéromone est choisie dans le groupe constitué par les phéromones d'insectes, particulièrement les phéromones sexuelles de lépidoptère, les phéromones de coléoptères, les phéromones de diptères, ainsi que leurs mélanges.

De manière avantageuse la phéromone peut être choisie parmi le ferruginéol, la ferruginéone ou un mélange ferruginéol-ferruginéone, la sordinine, la codlemone, la 4-hydroxy-1,7-dioxaspiroundecane, le géraniol, le géranyl hexanoate, et leurs mélanges.

Comme indiqué, selon un mode de réalisation, la phéromone, choisie préférentiellement parmi les phéromones sexuelles d'insectes, présente un point d'ébullition à pression atmosphérique supérieur à 180°C.

Les phéromones utilisables dans une formulation selon l'invention sont toutes les phéromones d'insecte mais tout particulièrement les phéromones sexuelles de lépidoptère, les phéromones de coléoptères (telles que la sordidine et le féruginéol), et les phéromones de diptères et leurs mélanges.

Dans un mode de réalisation de l'invention, la phéromone est choisie dans le groupe constitué par la phéromone du charançon rouge du palmier, la phéromone du charançon du bananier, la phéromone des taupins, la phéromone de la mouche de l'olive, la phéromone du carpocapse, la phéromone de la mouche du brou, les phéromones de l'eudémis, les phéromones de la cochylis de la vigne, les phéromones de la cochenille de la vigne, les phéromones de la miride du cacaoyer, ainsi que leurs mélanges.

Selon un mode de réalisation particulier la phéromone est choisie dans le groupe constitué par la phéromone du charançon rouge du palmier, la phéromone du charançon du bananier, la phéromone des taupins, la phéromone de la mouche de l'olive, la phéromone du carpocapse, la phéromone de la mouche du brou, les phéromones de l'eudémis, les phéromones de la cochylis de la vigne, la sordidine, le ferruginéol, la ferruginéone, la sordinine, la codlemone et leurs mélanges.

Dans un autre mode de réalisation les phéromones précédentes peuvent être utilisées en mélange de manière à attirer plusieurs types d'insectes dans un piège.

Le composé synergisant de la phéromone est, comme indiqué supra, un composé qui potentialise l'effet attractant de la phéromone.

De tels composés sont bien connus de l'homme du métier et sont variables selon la phéromone considérée, selon la culture que l'on souhaite protéger et selon l'insecte visé.

De nombreux composés, comme indiqué en introduction, peuvent jouer ce rôle de synergisant de la phéromone.

De tels composés sont identifiés et identifiables classiquement et de manière routinière par un homme du métier.

Par exemple, comme évoqué, un composé synergisant la phéromone de *Carpohilus hemipterus* consister en du raisin pourri car il a été constaté que la capture des insectes en utilisant cette phéromone est significativement supérieure lorsque les deux sont associés par rapport à la situation lorsque la phéromone est utilisée seule ou lorsque le raisin pourri est utilisé seul.

Une telle définition de composé synergisant repose sur la notion classique de mise en oeuvre d'une étude de synergie comme tout homme du métier sait le faire, consistant à comparer l'effet de l'utilisation de deux composés ensemble par rapport à la somme des effets individuels.

Une telle fonctionnalité peut être vérifiée via des essais classiques et routiniers.

En effet, il est bien connu que les odeurs végétales, en présence de la phéromone, peuvent modifier et amplifier l'effet de la phéromone et donc le comportement de l'insecte : les mâles de plusieurs espèces de papillons sont plus attirés, par exemple, par des mélanges de phéromone et de composés volatils provenant de plantes dont se nourrissent les chenilles ou de fleurs visitées par ces papillons.

Aussi un screening, non pas parmi tous les composés chimiques ou matières possibles et imaginables, mais parmi les composés ou matières d'origine végétale à la disposition correspond à un travail routinier et usuel à la portée de tout homme du métier.

Le composé synergisant de la phéromone peut être choisi dans le groupe comprenant l'acétate de (C1-C6)alkyle, l'acétate d'ammonium, l'acétoïne, l'ammoniac, le carbonate d'ammonium et le phosphate d'ammonium ainsi que leurs mélanges.

A titre d'exemple de composé synergisant de la phéromone on peut citer les acétates d'alkyle, c'est-à-dire les esters de l'acide acétique avec un alcanol.

On peut citer ainsi les acétates de (C1-C6)alkyle, linéaires ou ramifiés, et leurs mélanges. Ainsi le composé synergisant de la phéromone peut être choisi dans le groupe comprenant les acétates de (C1-C6)alkyle. En particulier, le composé synergisant de la phéromone peut être choisi dans le groupe comprenant l'acétate de méthyle, l'acétate d'éthyle, l'acétate de propyle, l'acétate d'isopropyle, l'acétate de butyle, l'acétate d'isobutyle, l'acétate de pentyle, l'acétate d'isopentyle et l'acétate d'hexyle, et leurs mélanges.

Le composé synergisant de la phéromone peut être choisi dans le groupe comprenant les esters d'un acide carboxylique en C1-C6 avec l'éthanol. En particulier, le composé synergisant de la phéromone peut être choisi dans le groupe comprenant le méthanoate d'éthyle, l'éthanoate d'éthyle, le propanoate d'éthyle, le butanoate d'éthyle, le pentanoate d'éthyle, l'hexanoate d'éthyle et leurs mélanges.

Le composé synergisant de la phéromone peut aussi être choisi dans le groupe comprenant l'acide acétique, l'acétate d'ammonium, l'acétoine (ou 3-hydroxybutanone), l'ammoniac, le carbonate d'ammonium, le phosphate d'ammonium et leurs mélanges.

Le composé synergisant de la phéromone peut être choisi dans le groupe comprenant des dérivés terpéniques, en particulier l'alpha-pinène et le menthol.

Le composé synergisant de la phéromone peut être choisi dans le groupe comprenant l'acide salicylique.

Le composé synergisant de la phéromone est choisi dans le groupe comprenant tous les composés cités ci-dessus, ainsi que leurs mélanges.

Le composé synergisant de la phéromone ou le mélange de composés synergisants de la phéromone est compris dans une quantité allant de 0 à 40%, en % en poids de la formulation, particulièrement entre 5 et 40%, plus particulièrement entre 5 et 30%, et de manière préférée aux environs de 15 à 20%.

Selon un mode de réalisation le composé synergisant de la ou des phéromones est différent de l'éthanol.

Les antioxydants, lorsque présents, peuvent être choisis dans le groupe constitué par la vitamine E, l'hydroxyanisole butylé(BHA), l'hydroxytoluène butylé (BHT) utilisés seuls ou en mélange. Ces antioxydant protègent la substance sémiochimique de la dégradation et peuvent être ajoutés dans des quantités, en pourcentage en poids de la composition, allant de 0,1% environ à 5% environ, particulièrement entre 0.5 et 2%.

Le polymère de la formulation selon l'invention et dont la solubilité, dans l'éthanol, est supérieure à 10% (p/v) à 70°C et inférieure à 1% (p/v) à 20°C, est un copolymère à blocs acryliques tri-blocs du type PMMA-PABu-PMMA (PMMA désignant le polyméthacrylate de méthyle et PABu désignant le polyacrylate de butyle).

La quantité de polymère pourra être comprise entre 0.1 et 10%, particulièrement entre 0.5 et 5% en poids de la formulation.

Selon un mode de réalisation le polymère présente un poids moléculaire moyen compris entre 10 000 et 200 000 g/mol, particulièrement entre 20 000 et 200 000 g/mol, plus particulièrement entre 30 000 et 150 000 g/mol.

Dans le cadre de la présente invention, l'expression « copolymère à blocs » : représente un copolymère à blocs issu de plusieurs espèces de polymères.

Dans le cadre de la présente invention, l'expression « bloc » représente la partie d'une macromolécule comprenant une pluralité d'unités constitutives et qui possède au moins une particularité de constitution ou de configuration qui n'apparaît pas dans les parties adjacentes.

Différents copolymères à blocs convenables et particulièrement adaptés à la présente invention sont disponibles dans le commerce auprès de la société Arkema, il s'agit par exemple des copolymères Nanostrengh^{®} triblock de poly(acrylate de butyle) (PABu) et de poly(méthacrylate de méthyle)(PMMA) obtenus par polymérisation radicalaire contrôlée par un nitroxyde selon la technologie connue et documentée Blockbuilder^{®}. On peut citer en particulier les copolymères de la gamme Nanostrenght^{®} d'Arkema et plus particulièrement les M53^{®} et M22^{®}.

Les inventeurs ont en effet noté que les polymères triblocs de poly(acrylate de butyle) (PABu) et de poly(méthacrylate de méthyle)(PMMA), généralement utilisés pour leur propriétés adhésives, de résistance au choc, de transparence permettaient une viscosité différentielle de la formulation éthanolique selon la température et permettaient donc une modulation du relargage de la phéromone et du composé synergisant de la phéromone lorsque présent. En effet, compte tenu de la faible solubilité du polymère dans l'éthanol à température ambiante ou en deçà, la composition voit sa viscosité baisser et la volatilité de la phéromone est facilitée. A contrario, à plus haute température (de l'ordre de 40 ou 50°C), la solubilité du polymère est accrue et la viscosité de la formulation aussi. Cette augmentation de viscosité freine la volatilité de la phéromone. Au final, on obtient une formulation dont la libération de la phéromone et de l'éventuel composé synergisant de la phéromone (qui est aussi volatil) se fait de manière équivalente. L'éthanol de la formulation est aussi évaporé de manière similaire aux phéromones et aux composés synergisants des phéromones.

Selon un mode de réalisation l'invention vise aussi un diffuseur comprenant :
- un réservoir présentant une ouverture,
- une formulation selon l'invention,
- un couvercle obturant le réservoir et doté d'une ouverture
- un moyen de diffusion traversant le couvercle et dont une partie est en contact avec la formulation et l'autre partie s'étend au-dessus du couvercle ; ledit moyen de diffusion permettant la migration de la formulation depuis la partie en contact avec la formulation vers la partie s'entendant au-dessus du couvercle et permettant l'évaporation de la formulation.

Dans un mode de réalisation particulier, le moyen de diffusion est une mèche, en particulier une mèche matériau composite contenant de la poudre de pin ou tout autre matériau comparable.

La formulation selon l'invention peut être intégrée dans un kit comprenant un réservoir présentant une ouverture obturée par un couvercle muni d'une ouverture et traversé par un moyen de diffusion s'étendant de part et d'autre dudit couvercle.

Les formulations selon l'invention peuvent être utilisées dans des diffuseurs à mèche et permettent d'obtenir des diffusions homogènes et linéaires de phéromone et de composé synergisant de la phéromone pendant des durées supérieures à 2 mois à 40°C.

L'invention vise encore l'utilisation d'une formulation ou d'un diffuseur selon l'invention pour la protection d'une culture vis-à-vis d'insectes ravageurs.

Un autre avantage de ces solutions réside dans le fait que leurs cinétiques de diffusion dans des diffuseurs à mèche sont peu affectées par les différences de température extérieure.

L'homme du métier ajoutera par ailleurs tout stabilisant tels que des antioxydants, nécessaires à préserver l'intégrité du mélange pendant toute la durée d'utilisation selon ce qui est déjà largement décrit dans l'art antérieur.

De telles formulations sont avantageusement utilisées dans des diffuseurs à mèche ou tout autre système de diffusion permettant le piégeage des insectes qu'il soit à but de monitoring ou à but de piégeage de masse.

### Exemples :

### Exemple 1 : Matériel et méthode de fabrication

Les diffuseurs sont constitués de flacons commerciaux en PET d'une contenance de 50 ml bouchés par un porte mèche en polyamide ou en polypropylène.

Les mèches utilisées sont des mèches commerciales dites « composite bois » achetées par exemple à la société Shangai prima.

Les polymères additifs sont des copolymères à blocs NanoStrength fabriqués par la société Arkema. Les références commerciales de ces produits sont : nano strength M22 et M53 (tous les deux correspondant à un copolymère a bloc acrylique constitués d'un bloc central de poly (butyl acrylate) entouré de deux blocs de poly (methyl méthacrylate)).

Les solubilités à froid et à chaud de ces polymères dans l'éthanol sont données dans le tableau suivant :

| | M22^{®} | M53^{®} |
|---|---|---|
| Solubilité à19°C (% poids) | 0.022% | 0.045% |
| Solubilité à ébullition (70°C) (% poids) | >15% | >10% |

Les polymères M22^{®} et M53^{®} répondent donc à la définition de l'invention. Ils ont la particularité de ne pas être soluble à froid (donc de ne pas viscosifier la solution à froid, mais de viscosifier la solution à chaud).

### Exemple 2 :

Les formulations des exemples suivants sont fabriquées selon le procédé suivant :
On prépare dans un ballon un mélange contenant le mélange de phéromone et de composé synergisant de la phéromone dans l'alcool.
On chauffe ce mélange à 40°C puis on ajoute la quantité souhaitée de polymère additif qu'on maintient sous agitation à 40°C jusqu'à dissolution complète du polymère. La température du mélange est ensuite ramenée à température ambiante.
Les flacons sont ensuite remplis à hauteur de 24 g ou 48g par flacon puis bouchés avec le porte mèche, la mèche et le bouchon à vis.

Le tableau suivant résume les mélanges qui ont été fabriqués selon l'invention dans ces conditions :

| **Exemple** | **2A** | **2B** | **2C** | **2D** | **2E** | **2F** | **2G*** |
|---|---|---|---|---|---|---|---|
| Phéromone | Féruginéol | Féruginéol | Féruginéol | Féruginéol | Sordidine | Codlemone | Féruginéol |
| Composé synergisant de la phéromone | Acétate d'éthyle | Acétate d'éthyle | Acétate d'éthyle | Acétate d'éthyle | Acétate d'isoamyle | Acétate d'éthyle | Acétate d'éthyle |
| alcool (g) | 17,61 | 17.52 | 17,36 | 16,89 | 19,76 | 19,51 | 17,61 |
| Composé synergisant de la phéromone (g) | 5,87 | 5,84 | 5,79 | 5,63 | 6,59 | 19,51 | 5,87 |
| phéromone(g ) | 0,94 | 0,93 | 0,93 | 0,90 | 0,13 | 7,80 | 0,94 |
| Polymère M53 (g) | 0,12 | 0,23 | 0,46 | 1,13 | 0,26 | 0,39 | 0 |
| Tocophérol | 0,47 | 0,47 | 0,46 | 0,45 | 0,26 | 0,78 | 0,47 |
| total (g) | 25 | 25 | 25 | 25 | 27 | 48 | 25 |

| | | | | | | | |
|---|---|---|---|---|---|---|---|
| ***hors invention** | | | | | | | |

On constate dans les exemples 2C et 2D que les formulations sont claires à 40°C mais présentent un léger voile à 20°C ce qui est caractéristique de la solubilité limitée des polymères à des températures de l'ordre de 20°C.

### Exemple 3 : Comparaison des cinétiques d'évaporation en fonction de la composition en étuves ventilées

De manière à comparer les cinétiques d'évaporation, nous avons placé dans 2 étuves ventilées des flacons correspondants aux solutions des exemples 2A-2D et 2G. La première étuve est réglée à 30°C la seconde à 40°C.

Nous mesurons par pesée régulièrement les poids de chaque flacon et nous en déduisons la quantité évaporée depuis le début de l'expérience. Les temps de demie vie et correspondants à 90% de diffusion sont reportée dans le tableau suivant.

| **Exemple** | **2A** | **2B** | **2C** | **2D** | **2G** |
|---|---|---|---|---|---|
| | **40°C** | | | | |
| T50 (j) | 48 | 68 | 94 | 149 | 3 |
| T90 (j) | 96 | 154 | 232 | 296 | 7 |
| | **30°C** | | | | |
| T50 (j) | 61,00 | 82,00 | 109 | 168,00 | 15,00 |
| T90 (j) | 133,00 | 189,00 | 272 | 365,00 | 30,00 |

Ce tableau montre que les durées des formulations comportant du polymère M53 ont tous des temps de demie vie supérieurs à 2 mois quelle que soit la température de l'étuve alors que la formulation sans polymère (2G) s'évapore en moins de 10 jours.

Nous observons par ailleurs que la différence d'évaporation à 30°C et 40°C de ces formulations n'ont pas plus de 50% de différence alors que la formulation 2G s'évapore 5 fois plus vite à 40°C qu'à 30°C. C'est un autre intérêt de l'invention de limiter les écarts de durée de diffusion en fonction de la température.

### Exemple 4 : Exemple de piégeage de charançons rouges avec des diffuseurs remplis de la formulation 2B

On dispose des diffuseurs à mèche contenant la solution dans 5 pièges de type « pit fall » rempli d'eau au 21 mars 2017. On les place à 10 mètres de palmiers infestés de charançons rouges. Le diffuseur est remplacé le 12 septembre 2017

| Mois (2017) | Avril | mai | Juin | juillet | Août | septembre |
|---|---|---|---|---|---|---|
| moyenne mensuelle par piège | 4,7 | 8,4 | 8,2 | 7,9 | 13,2 | 14,4 |

Nous constatons que le piégeage est allé en croissant depuis le début de l'expérience jusqu'au 12 septembre 2017 date du changement des flacons de diffusion. Cela montre que la durée de diffusion en conditions réelles est supérieure à 4.5 mois.

## Revendications

1. Formulation phéromonale comprenant :
a) 20% à 90%, en volume, d'éthanol,
b) 0.1% à 10%, en poids, d'au moins une phéromone dont la température d'ébullition est supérieure à 180°C à pression atmosphérique,
c) 0.1% à 10% en poids d'un polymère dont la solubilité, dans l'éthanol, est supérieure à 10% (p/v) à 70°C et inférieure à 1% (p/v) à 20°C,
d) 0 à 40% en poids d'au moins un composé synergisant de la phéromone choisi parmi : les acétates de (C1-C6)alkyle, les esters d'un acide carboxylique en C₁-C₆ avec l'éthanol, l'acide acétique, l'acétate d'ammonium, l'acétoïne, l'ammoniac, le carbonate d'ammonium, le phosphate d'ammonium, les dérivés terpéniques tels que l'alpha-pinène ou le menthol, l'acide salicylique et leurs mélanges,
e) 0 à 5% en poids d'anti-oxydant,
**caractérisée en ce que** le polymère est un copolymère à blocs acryliques tri-blocs PMMA-PABu-PMMA.

2. Formulation selon la revendication 1, **caractérisée en ce que** le composé synergisant de la phéromone est choisi dans le groupe constitué d'acétate de (C1-C6)alkyle, d'acétate d'ammonium, d'acétoïne, d'ammoniac, de carbonate d'ammonium et de phosphate d'ammonium ainsi que leurs mélanges.

3. Formulation selon les revendications 1 à 2 **caractérisée en ce que** l'antioxydant est choisi dans le groupe constitué par la vitamine E, l'hydroxyanisole butylé(BHA), l'hydroxytoluène butylé (BHT) et leurs mélanges.

4. Formulation selon l'une des revendications 1 à 3, **caractérisée en ce que** la phéromone est choisie dans le groupe constitué par les phéromones d'insectes, particulièrement les phéromones sexuelles de lépidoptère, les phéromones de coléoptères, les phéromones de diptères, ainsi que leurs mélanges.

5. Formulation selon l'une des revendications 1 à 4, **caractérisée en ce que** la phéromone est choisie dans le groupe constitué par la phéromone du charançon rouge du palmier, la phéromone du charançon du bananier, la phéromone des taupins, la phéromone de la mouche de l'olive, la phéromone du carpocapse, la phéromone de la mouche du brou, les phéromones de l'eudémis, les phéromones de la cochylis de la vigne, la sordidine, le ferruginéol, la ferruginéone, la sordinine, la codlemone et leurs mélanges.

6. Diffuseur comprenant :
- un réservoir présentant une ouverture,
- une formulation selon l'une des revendications 1 à 5,
- un couvercle obturant le réservoir et doté d'une ouverture
- un moyen de diffusion traversant le couvercle et dont une partie est en contact avec la formulation et l'autre partie s'étend au-dessus du couvercle ; ledit moyen de diffusion permettant la migration de la formulation depuis la partie en contact avec la formulation vers la partie s'entendant au-dessus du couvercle et permettant l'évaporation de la formulation.

7. Utilisation d'une formulation selon l'une des revendications 1 à 5 ou d'un diffuseur selon la revendication 6 pour la protection d'une culture vis-à-vis d'insectes ravageurs.

## Patentansprüche

1. Pheromonformulierung, umfassend:
a) 20 bis 90 Vol.-% Ethanol,
b) 0,1 bis 10 Gew.-% mindestens eines Pheromons, dessen Siedetemperatur bei atmosphärischem Druck über 180°C beträgt,
c) 0,1 bis 10 Gew.-% eines Polymers, dessen Löslichkeit in Ethanol über 10% (Gew./Vol.) bei 70°C und unter 1% (Gew./Vol.) bei 20°C beträgt,
d) 0 bis 40 Gew.-% mindestens einer synergisierenden Verbindung des Pheromons, die aus den C₁-C₆-Alkylacetaten, den Estern einer C₁-C₆-Carbonsäure mit Ethanol, der Essigsäure, dem Ammoniumacetat, dem Acetoin, dem Ammoniak, dem Ammoniumcarbonat, dem Ammoniumphosphat, den Terpenderivaten wie alpha-Pinen oder Menthol, der Salicylsäure und deren Gemischen ausgewählt ist,
e) 0 bis 5 Gew.-% Antioxidationsmittel,
**dadurch gekennzeichnet, dass** das Polymer ein Copolymer mit Dreiblock-Acrylblöcken PMMA-PABu-PMMA ist.

2. Formulierung nach Anspruch 1, **dadurch gekennzeichnet, dass** die synergisierende Verbindung des Pheromons aus der Gruppe ausgewählt ist, die von dem C₁-C₆-Alkylacetat, dem Ammoniumacetat, dem Acetoin, dem Ammoniak, dem Ammoniumcarbonat und dem Ammoniumphosphat sowie deren Gemischen gebildet ist.

3. Formulierung nach den Ansprüchen 1 bis 2 **dadurch gekennzeichnet, dass** das Antioxidationsmittel aus der Gruppe ausgewählt ist, die von dem Vitamin E, dem butylierten Hydroxyanisol (BHA), dem butylierten Hydroxytoluen (BHT) und deren Gemischen gebildet ist.

4. Formulierung nach einem der Ansprüche 1 bis 3, **dadurch gekennzeichnet, dass** das Pheromon aus der Gruppe ausgewählt ist, die von den Insektenpheromonen, vor allem den sexuellen Lepidoptera-Pheromonen, den Coleoptera-Pheromonen, den Diptera-Pheromonen sowie deren Gemischen gebildet ist.

5. Formulierung nach einem der Ansprüche 1 bis 4, **dadurch gekennzeichnet, dass** das Pheromon aus der Gruppe ausgewählt ist, die von dem Pheromon des Roten Palmenrüsselkäfers, dem Pheromon des Bananenrüsselkäfers, dem Pheromon der Schnellkäfer, dem Pheromon der Olivenfliege, dem Pheromon des Apfelwicklers, dem Pheromon der Walnussfruchtfliege, den Pheromonen des bekreuzten Traubenwicklers, den Pheromonen des einbindigen Traubenwicklers, dem Sordidin, dem Ferrugineol, dem Ferrugineon, dem Sordinin, dem Codlemon und deren Gemischen gebildet ist.

6. Zerstäuber, umfassend:
- einen Vorratsbehälter, der eine Öffnung aufweist,
- eine Formulierung nach einem der Ansprüche 1 bis 5,
- einen Deckel, der den Vorratsbehälter verschließt und mit einer Öffnung versehen ist,
- ein Zerstäubungsmittel, das den Deckel durchquert und von dem ein Teil mit der Formulierung im Kontakt ist und sich der andere Teil oberhalb des Deckels erstreckt; wobei das Zerstäubungsmittel die Migration der Formulierung von dem Teil im Kontakt mit der Formulierung zu dem Teil gestattet, der sich oberhalb des Deckels erstreckt und das Zerstäuben der Formulierung gestattet.

7. Verwendung einer Formulierung nach einem der Ansprüche 1 bis 5 oder eines Zerstäubers nach Anspruch 6 zum Schutz einer Kultur vor schädlichen Insekten.

## Claims

1. A pheromone formulation comprising:
a) 20% to 90%, by volume, of ethanol,
b) 0.1% to 10%, by weight, of at least one pheromone whose boiling temperature is greater than 180°C at atmospheric pressure,
c) 0.1% to 10% by weight of a polymer whose solubility in ethanol is greater than 10% (w/v) at 70°C and less than 1% (w/v) at 20°C,
d) 0 to 40% by weight of at least one pheromone synergizing compound selected from: (C1-C6)alkyl acetates, esters of a C₁-C₆ carboxylic acid with ethanol, acetic acid, ammonium acetate, acetoin, ammonia, ammonium carbonate, ammonium phosphate, terpene derivatives such as alpha-pinene or menthol, salicylic acid, and mixtures thereof,
e) 0 to 5% by weight of antioxidant,
**characterized in that** the polymer is a PMMA-PABu-PMMA triblock acrylic block copolymer.

2. The formulation as claimed in claim 1, **characterized in that** the pheromone synergizing compound is selected from the group consisting of (C1-C6)alkyl acetate, ammonium acetate, acetoin, ammonia, ammonium carbonate and ammonium phosphate and mixtures thereof.

3. The formulation as claimed in claims 1 to 2, **characterized in that** the antioxidant is selected from the group consisting of vitamin E, butylated hydroxyanisole (BHA), butylated hydroxytoluene (BHT) and mixtures thereof.

4. The formulation as claimed in one of claims 1 to 3, **characterized in that** the pheromone is selected from the group consisting of insect pheromones, particularly lepidopteran sex pheromones, coleopteran pheromones, dipteran pheromones and mixtures thereof.

5. The formulation as claimed in one of claims 1 to 4, **characterized in that** the pheromone is selected from the group consisting of red palm weevil pheromone, banana weevil pheromone, click beetle pheromone, olive fly pheromone, codling moth pheromone, husk fly pheromone, *Eudemis* pheromones, vine moth pheromones, sordidin, ferrugineol, ferrugineone, sordinin, codlemone and mixtures thereof.

6. A diffuser comprising:
- a tank with an opening,
- a formulation as claimed in one of claims 1 to 5,
- a cap closing the tank and having an opening
- a diffusion means passing through the cap and having a portion in contact with the formulation and the other portion extending above the cap; said diffusion means allowing migration of the formulation from the portion in contact with the formulation to the portion extending above the cap and allowing evaporation of the formulation.

7. Use of a formulation as claimed in one of claims 1 to 5 or of a diffuser as claimed in claim 6 for protecting a crop against insect pests.
